# EUROPÄISCHE PATENTSCHRIFT

(11) **EP 1 162 589 B1**
(45) Veröffentlichungstag und Bekanntmachung des Hinweises auf die Patenterteilung: **24.03.2004**
(21) Anmeldenummer: 00112202.7
(22) Anmeldetag: 07.06.2000
(51) Int. Cl.: G09B 29/04

(54) **Auf ein Kleinformat zusammenfaltbares und Zusatzleistungen ermöglichendes Informationsblatt**
Information sheet foldable to a small size allowing extra services
Feuille porteuse d'informations repliable au format d'une carte de chèque permettant l'accès à des services complémentaires

(43) Veröffentlichungstag der Anmeldung: 12.12.2001
(73) Patentinhaber: Baumer AG, 8501 Frauenfeld (CH)
(72) Erfinder: Jud, Max, 8308 Illnau (CH)
(74) Vertreter: Patentanwälte Schaad, Balass, Menzl & Partner AG

(56) Entgegenhaltungen:
- WO-A-96/28307
- FR-A- 2 784 210
- US-A- 5 156 898

## Beschreibung

Die Erfindung betrifft ein auf ein Kleinformat zusammenfaltbares Informationsblatt gemäss dem Oberbegriff des Anspruches 1.

Derartige Informationsblätter werden in verschiedensten Ausgestaltungen zu verschiedensten Zwecken verwendet und finden gerade dort ein ideales Anwendungsgebiet, wo erwartet wird, dass der Benutzer das Informationsblatt bei sich trägt (Stadtpläne, Verkehrspläne, Messepläne etc.). In zusammengefaltetem Zustand vorzugsweise annähernd ein Kreditkartenformat aufweisend finden sie in jeder Tasche oder in jedem Portemonnaie Platz und bieten dennoch ausreichend Platz für Informationen. Nicht zuletzt sind sie auch ideale Werbeträger. Ein Blatt dieser Art ist beispielsweise aus der WO 96/28307 bekannt.

Der vorliegenden Erfindung liegt die Aufgabe zugrunde, die Nützlichkeit der Informationsblätter der eingangs genannten Art weiter zu steigern und ihre Einsatzmöglichkeiten zu erweitern.

Diese Aufgabe wird erfindungsgemäss durch ein Informationsblatt mit den Merkmalen des Anspruches 1 gelöst.

Dadurch, dass einer der Falzabschnitte mit einer kontaktlos ankoppelbaren, lesbaren Datenspeichereinheit versehen ist, besteht die Möglichkeit, verschiedene Zusatzleistungen dem Benutzer des Informationsblattes anzubieten, die er in Anspruch nehmen kann, ohne zusätzliche Billette, Coupons oder sonstige Bezugsmittel zu benötigen.

Bevorzugte Weiterausgestaltungen des erfindungsgemässen Informationsblattes bilden den Gegenstand der abhängigen Ansprüche.

Die Erfindung wird im folgenden anhand der Zeichnung näher erläutert.

Es zeigen:
- Fig. 1: ein Ausführungsbeispiel eines auseinandergefalteten Informationsblattes in Draufsicht (ohne Beschriftung);
- Fig. 2 bis 4: in perspektivischer Darstellung verschiedene aufeinanderfolgende Phasen der Zusammenfaltung des in Fig. 1 dargestellten Informationsblattes; und
- Fig. 5: in perspektivischer Darstellung einen mit einem Datenträger und einem Deckblatt versehenen Falzabschnitt, der beim zusammengefalteten Informationsblatt einen Aussenfalzabschnitt bildet.

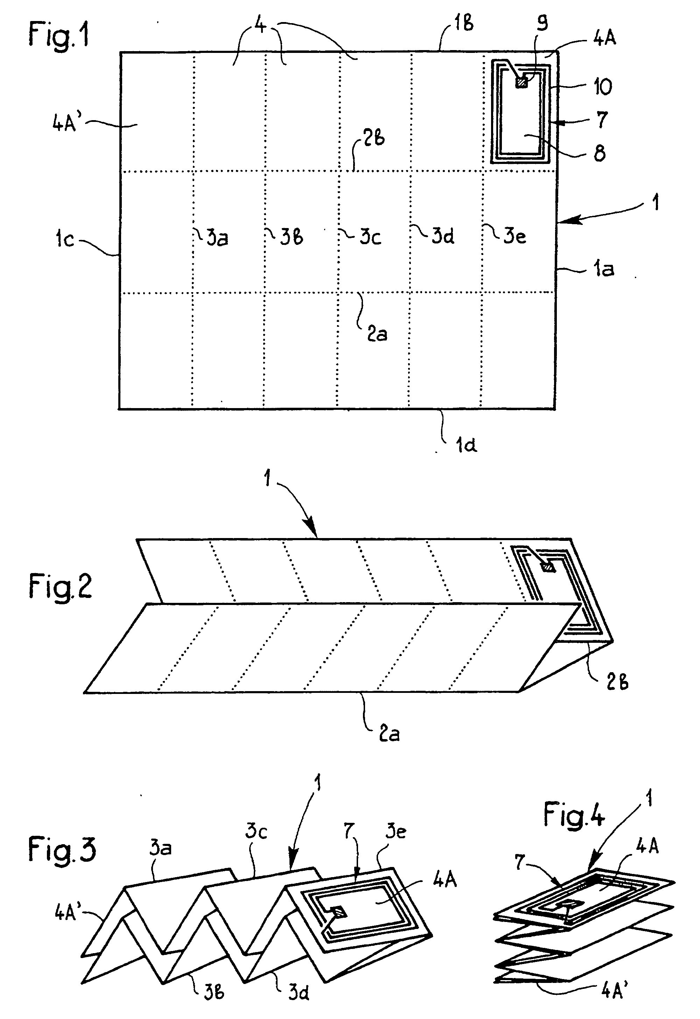

Fig. 1 zeigt ein rechteckförmiges Informationsblatt 1 (im vorliegenden Fall ein Plan) im auseinandergefalteten Zustand. Die Randseiten des Plans sind in Fig. 1 mit 1a, 1b, 1c und 1d bezeichnet. Beim dargestellten Ausführungsbeispiel ist das Informationsblatt 1 durch zwei Längsfaltungen 2a, 2b und fünf Querfaltungen 3a, 3b, 3c, 3d und 3e in achtzehn rechteckförmige Falzabschnitte 4 unterteilt. Die Falzabschnitte 4 weisen vorzugsweise zumindest annähernd die Grösse einer Standardkreditkarte (54 x 86 mm) auf.

Die graphische Ausgestaltung des Informationsblattes bzw. Plans 1 ist aus der Zeichnung nicht ersichtlich. Es kann sich beispielsweise um einen Messgeländeplan, einen Strassenplan, einen Verkehrsplan, einen Fahrplan, einen Konferenzplan etc. handeln. Das Informationsblatt 1 kann aber auch nur teilweise als Plan bedruckt sein. Die einzelnen Falzabschnitte 4 können als Träger von verschiedenen weiteren Informationen oder Reklamen ausgebildet sein. Auch eine Anordnung von Rubbelflächen für verschiedene Wettbewerbe ist möglich. Einer der Falzabschnitte 4, gegebenenfalls der durch Randseiten 1a, 1b sowie durch die Längsfaltung 2b und die Querfaltung 3e begrenzter Falzabschnitt 4A ist erfindungsgemäss mit einem Datenträger 7 versehen, der eine Trägerfolie 8, eine auf der Trägerfolie 8 aufgebrachte, als Chip ausgebildete Datenspeichereinheit 9 sowie eine auf der Trägerfolie 8 aufgebrachte Antenne 10 umfasst. Die Datenspeichereinheit 9 ist ein Schreib-Lese-Speicher (read-write memory), der kontaktlos mit Daten geladen werden kann, und von dem kontaktlos Daten gelesen werden können. Die gespeicherten Daten können auch verändert werden. Die kontaktlos ankoppelbare Datenspeichereinheit 9 bedarf keiner eigenen Energiequelle. Beim Datenträger 7, auch Transponder genannt, handelt es sich um ein handelsübliches Produkt, das in Fachkreisen unter dem Begriff "RFID (Radio Frequency Identifikation)-Label" bekannt ist. Dieser Datenträger 7 ist dazu vorgesehen, dem Benutzer des Plans 1 den Bezug von verschiedenen Zusatzleistungen zu ermöglichen, ohne dass er irgendwelche weitere Bezugsmittel (Coupons, Bons, Eintrittskarten etc.) bei sich tragen muss. So kann beispielsweise ein mit einem Datenträger 7 versehener Ausstellungsplan den Benutzer zum Bezug eines Gratisgetränkes, zum Eintritt zu einem Vortrag oder sonstigen Vorführung oder Veranstaltung, zum bargeldlosen Einkaufen mit einer Gesamtabrechnung beim Verlassen des Ausstelungsgeländes und zu verschiedenen anderen Zusatzleistungen berechtigen.

Bei dem in Fig. 2 bis 4 dargestellten Beispiel einer Faltung des Informationsblattes bzw. Plans 1 wird zuerst der Plan 1 in seiner Breite zusammengefaltet, wobei zuerst die Längsfaltung 2a und danach die Längsfaltung 2b zum Einsatz kommt (Fig. 2). Danach wird der Plan auch in seiner Länge mittels der Querfaltungen 3a bis 3e in der Art einer Ziehharmonika zusammengefaltet (Fig. 3). Dabei bilden der bereits erwähnte, gegebenenfalls mit dem Datenträger 7 versehene Falzabschnitt 4A und der durch Randseiten 1b, 1c sowie durch die Längsfaltung 2b und die Querfaltung 3a begrenzter Falzabschnitt 4A' die Aussenfälzabschnitte des zusammengefalteten Plans 1 (Fig. 3 und 4). Diese Aussenfälzabschnitte 4a, 4A' können zum Schutz des zusammengefalteten Plans 1 und zur besseren Handhabung beim Auseinander- und Zusammenfalten desselben gegenüber den übrigen Falzabschnitten 4 verstärkt bzw. versteift werden. Der Plan 1 bleibt dadurch auch nach intensivem Gebrauch gut erhalten. Mit Vorteil ist die Faltung so vorgesehen, dass die Aussenfälz-abschnitte 4A, 4A' durch die Eckabschnitte des auseinandergefalteten Planes gebildet sind. Dabei könnten die Aussenfälzabschnitte in ihrer Grösse von den anderen Falzabschnitten 4 leicht abweichen und die Randseiten 1a, 1b bzw. 1b, 1c leicht überragen, um besser ergriffen werden zu können, wie es beispielsweise bei den Eckabschnitten nach der EP-B1- 0 288 472 der Fall ist.

Selbstverständlich kann ein Plan eine durchaus andere Anzahl von Längs- und Querfaltungen und somit eine andere Anzahl von Falzabschnitten aufweisen, als in Fig. 1 dargestellt. Auch kann die Zusammenfaltung anders erfolgen als in Fig. 2 bis 4 gezeigt. Eine andere Art der Faltung, bei der die Aussenfälzabschnitte durch diagonal gegenüberliegende Eckabschnitte des auseinandergefalteten Informationsblattes gebildet sind, ist beispielsweise in der EP-B1-0 288 472 dargestellt und beschrieben.

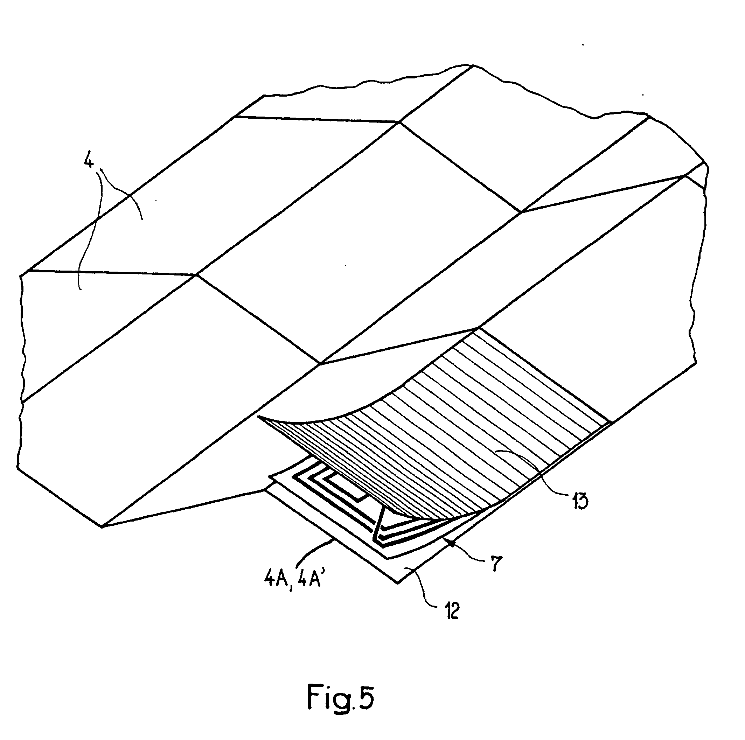

Der Datenträger 7 kann auf dem Plan 1 beliebig plaziert, d.h am beliebigen Falzabschnitt 4 angebracht werden, die Anordnung an einem der beiden Aussenfalzabschnitte 4A, 4A' ist jedoch besonders vorteilhaft. Dann kann nämlich - wie in Fig. 5 dargestellt - ein den auf einer Plangrundfläche 12 dieses Aussenfalzabschnittes 4A aufgebrachten Datenträger 7 abdeckendes Deckblatt 13 gleichzeitig die vorstehend erwähnte Verstärkung bzw. Versteifung dieses Aussenfalzabschnittes 4A bilden.

Das Informationsblatt kann aus Papier oder jedem anderen faltbaren Material bestehen. Für das aus Fig. 5 ersichtliche Deckblatt 13 ist als Material beispielsweise Kunststoff geeigenet.

Die Datenspeichereinheit 9 kann auch nur ein Lesespeicher (read-only memory) sein, bei dem allerdings die einmal gespeicherten Daten nicht mehr verändert werden können. Im Gegensatz zum gezeigten Ausführungsbeispiel mit einem Schreib-Lese-Speicher können nach dem Anbringen des Datenträgers 7 auf dem Plan 1 somit keine neuen Daten mehr geladen werden.

## Patentansprüche

1. Auf ein Kleinformat zusammenfaltbares Informationsblatt, das durch eine Anzahl von Faltungen (2a, 2b, 3a, 3b, 3c, 3d, 3e) in eine Anzahl von Falzabschnitten (4) unterteilt ist, wobei einer der Falzabschnitte (4) mit einem Datenspeicher versehen ist, **dadurch gekennzeichnet, dass** der Datenspeicher eine dem Benutzer des Informationsblattes (1) den Bezug von Zusatzleistungen ermöglichende, als Chip ausgebildete, zum Lesen kontaktlos ankoppelbare Datenspeichereinheit (9) ist, die zusammen mit einer mit ihr verbundenen Antenne (10) auf einer Trägerfolie (8) aufgebracht ist.

2. Informationsblatt nach Anspruch 1, **dadurch gekennzeichnet, dass** die Datenspeichereinheit (9) ein Schreib-Lese-Speicher ist.

3. Informationsblatt nach Anspruch 1, **dadurch gekennzeichnet, dass** die Datenspeichereinheit (9) ein Lesespeicher ist.

4. Informationsblatt nach Anspruch 1, **dadurch gekennzeichnet, dass** die Trägerfolie (8) mit der Datenspeichereinheit (9) und mit der Antenne (10) einen Datenträger (7) bildet, der an einem Falzabschnitt (4) angeordnet ist.

5. Informationsblatt nach Anspruch 4, **dadurch gekennzeichnet, dass** der Datenträger (7) zwischen einer Grundfläche (12) des Falzabschnittes (4) und einem Deckblatt (13) angeordnet ist.

6. Informationsblatt nach Anspruch 4 oder Anspruch 5, **dadurch gekennzeichnet, dass** der Datenträger (7) einem der beiden Falzabschnitte (4) zugeordnet ist, die beim zusammengefalteten Informationsblatt die Aussenfalzabschnitte (4A, 4A') bilden, und die zur besseren Handhabung und zum Schutz des Informationsblattes (1) gegenüber den anderen Falzabschnitten (4) verstärkt sind.

7. Informationsblatt nach Anspruch 6, **dadurch gekennzeichnet, dass** das Deckblatt (13) die Verstärkung des mit dem Datenträger (7) versehenen Aussenfalzabschnittes (4A) bildet.

8. Informationsblatt nach Anspruch 6 oder Anspruch 7, **dadurch gekennzeichnet, dass** der mit dem Datenträger (7) versehene Aussenfalzabschnitt (4A) einen Eckabschnitt des auseinandergefalteten Informationsblattes (1) bildet.

9. Informationsblatt nach einem der Ansprüche 1 bis 8, **dadurch gekennzeichnet, dass** die Falzabschnitte (4) zumindest annähernd die Grösse einer Standardkreditkarte aufweisen.

10. Informationsblatt, nach einem der Ansprüche 1 bis 9, **gekennzeichnet durch** eine erste und eine zweite Faltung (2a, 2b; 3a, 3b, 3c, 3d, 3e), die rechtwinklig zueinander verlaufen.

11. Informationsblatt nach Anspruch 10, **dadurch gekennzeichnet, dass** die erste Faltung durch eine gerade Zahl von Längsfaltungen, vorzugsweise zwei Längsfaltungen (2a, 2b) und die zweite Faltung durch eine ungerade Zahl von Querfaltungen, vorzugsweise fünf Querfaltungen (3a, 3b, 3c, 3d, 3e) gebildet ist, wobei die zur gleichen Randseite (1b) des auseinandergefalteten Informationsblattes (1) liegenden Eckabschnitte beim zusammengefalteten Informationsblatt die Aussenfalzabschnitte (4A, 4A') bilden.

12. Informationsblatt nach einem der Ansprüche 1 bis 11, **dadurch gekennzeichnet, dass** das Informationsblatt (1) mindestens teilweise mit einem Plan, insbesondere einem Situations-, Stadtoder Strassenplan bedruckt ist.

## Claims

1. Information sheet which can be folded up into a small format and which is divided into a number of fold sections (4) by means of a number of folds (2a, 2b, 3a, 3b, 3c, 3d, 3e), one of the fold sections (4) being provided with a data memory, **characterized in that** the data memory is a data storage unit (9) which permits the user of the information sheet (1) to obtain supplementary services, is embodied as a chip, can be coupled in a contactless fashion for reading purposes and is mounted, together with an antenna (10) connected to it, on a carrier film (8).

2. Information sheet according to Claim 1, **characterized in that** the data storage unit (9) is a read/write memory.

3. Information sheet according to Claim 1, **characterized in that** the data storage unit (9) is a read memory.

4. Information sheet according to Claim 1, **characterized in that** the carrier film (8) forms, with the data storage unit (9) and with the antenna (10), a data carrier (7) which is arranged on a fold section (4).

5. Information sheet according to Claim 4, **characterized in that** the data carrier (7) is arranged between a base surface (12) of the fold section (4) and a cover sheet (13).

6. Information sheet according to Claim 4 or Claim 5, **characterized in that** the data carrier (7) is assigned to one of the two fold sections (4) which, when the information sheet is folded up, form the external fold sections (4A, 4A') and which are reinforced with respect to the other fold sections (4) in order to provide better handling and to protect the information sheet (1).

7. Information sheet according to Claim 6, **characterized in that** the cover sheet (13) forms the reinforcement of the external fold section (4A) which is provided with the data carrier (7).

8. Information sheet according to Claim 6 or Claim 7, **characterized in that** the external fold section (4A) which is provided with the data carrier (7) forms a corner section of the information sheet (1) in the folded-out state.

9. Information sheet according to one of Claims 1 to 8, **characterized in that** the fold sections (4) are at least approximately of the size of a standard credit card.

10. Information sheet according to one of Claims 1 to 9, **characterized by** a first and a second fold (2a, 2b; 3a, 3b, 3c, 3d, 3e), said folds running at right angles to one another.

11. Information sheet according to Claim 10, **characterized in that** the first fold is formed by an even number of longitudinal folds, preferably two longitudinal folds (2a, 2b), and the second fold is formed by an uneven number of transverse folds, preferably five transverse folds (3a, 3b, 3c, 3d, 3e), the corner sections which are located on the same edge side (1b) of the information sheet (1) in the folded-out state forming the external fold sections (4A, 4A') when the information sheet is folded up.

12. Information sheet according to one of Claims 1 to 11, **characterized in that** a map, in particular a map of a situation, a town or streets, is printed on at least part of the information sheet (1).

## Revendications

1. Feuille porteuse d'informations repliable en un petit format, laquelle est subdivisée par un nombre de pliures (2a, 2b, 3a, 3b, 3c, 3d, 3e) en un nombre de portions de pliage (4), où une des portions de pliage (4) est pourvue d'une mémoire d'informations, **caractérisée en ce que** la mémoire d'informations est une unité de stockage des données (9) développée sous la forme d'une puce et pouvant être accouplée sans contact pour la lecture et qui permet à un utilisateur de la feuille porteuse d'informations (1) d'accéder à des prestations complémentaires, laquelle unité est placée avec une antenne (10) qui lui est raccordée, sur une feuille de support (8).

2. Feuille porteuse d'informations selon la revendication 1, **caractérisée en ce que** l'unité de stockage des données (9) est une mémoire de lecture-écriture.

3. Feuille porteuse d'informations selon la revendication 1, **caractérisée en ce que** l'unité de stockage des données (9) est une mémoire de lecture.

4. Feuille porteuse d'informations selon la revendication 1, **caractérisée en ce que** la feuille de support (8) forme un support de données (7) avec l'unité de stockage des données (9) et avec l'antenne (10), lequel support de données est disposé sur une portion de pliage (4).

5. Feuille porteuse d'informations selon la revendication 4, **caractérisée en ce que** le support de données (7) est disposé entre une surface de base (12) de la portion de pliage (4) et une feuille de couverture (13).

6. Feuille porteuse d'informations selon l'une quelconque des revendications 4 ou 5, **caractérisée en ce que** le support de données (7) est affecté à l'une des deux portions de pliage (4), lesquelles forment les portions de pliage extérieures (4A, 4A') à l'état replié de la feuille porteuse d'informations, et qui sont renforcées par rapport aux autres portions de pliage (4) pour un meilleur maniement de la feuille porteuse d'informations (1) et pour la protéger.

7. Feuille porteuse d'informations selon la revendication 6, **caractérisée en ce que** la feuille de couverture (13) forme le renforcement de la portion de pliage extérieure (4A) pourvue du support de données (7).

8. Feuille porteuse d'informations selon l'une quelconque des revendications 6 ou 7, **caractérisée en ce que** la portion de pliage extérieure (4A) pourvue du support de données (7) forme une portion en coin de la feuille porteuse d'informations (1) dépliée.

9. Feuille porteuse d'informations selon l'une quelconque des revendications 1 à 8, **caractérisée en ce que** les portions de pliage (4) présentent au moins à peu près la taille d'une carte de crédit standard.

10. Feuille porteuse d'informations selon l'une quelconque des revendications 1 à 9, **caractérisée par** une première et une deuxième pliure (2a, 2b; 3a, 3b, 3c, 3d, 3e), lesquelles s'étendent en angle droit l'une par rapport à l'autre.

11. Feuille porteuse d'informations selon la revendication 10, **caractérisée en ce que** le premier pliage est formé par un nombre pair de pliures longitudinales, de préférence deux pliures longitudinales (2a, 2b), et **en ce que** le deuxième pliage est formé par un nombre impair de pliures transversales, de préférence cinq pliures transversales (3a, 3b, 3c, 3d, 3e), moyennant quoi les portions en coins situées du même côté de bordure (1b) de la feuille porteuse d'informations (1) dépliée, forment les portions de pliage extérieures (4A, 4A') lors que la feuille porteuse d'informations est repliée.

12. Feuille porteuse d'informations selon l'une quelconque des revendications 1 à 11, **caractérisée en ce que** la feuille porteuse d'informations (1) est au moins en partie imprimée avec un plan, en particulier un plan de situation, de ville ou de rues.
